# EUROPEAN PATENT SPECIFICATION

(11) **EP 0 620 091 B1**
(45) Date of publication and mention of the grant of the patent: **14.08.1996**
(21) Application number: 93890031.3
(22) Date of filing: 01.03.1993
(51) Int. Cl.: B29B 11/16, B29C 70/00, B29K 105/08

(54) **Method and apparatus for making structural reinforcement preforms including energetic basting and stitching**
Verfahren und Vorrichtung zur Herstellung von strukturellen verstärkten Vorformlingen, mit energetischen temporären Verkleben oder Heften
Procédé et dispositif pour la manufacture des demi-produits pour renforcement structural, avec collage-temporaire ou fixation énergétique

(43) Date of publication of application: 19.10.1994
(73) Proprietor: THE C.A. LAWTON COMPANY, DePere, Wisconsin 54115-0330 (US)
(72) Inventor: Buckley, Daniel T., Shrewsbury, VT 05738 (US); Horn, Siegfried W., Perrysburg, Ohio 43551 (US)
(74) Representative: Klein, Adam, Dipl.Ing.

(56) References cited:
- EP-A- 0 178 679
- EP-A- 0 185 960
- EP-A- 0 431 442
- WO-A-91/10547
- PATENT ABSTRACTS OF JAPAN vol. 11, no. 34 (M-558)(2481) 31 January 1987 & JP-A-61 202 823 (SURIIBONDO K.K.) 8 September 1986

## Description

The present invention refers to a method of making a rigid three-dimensional preform, wherein a binder being curable by electromagnetic energy is applied to fibrous reinforcing material and the binder is cured by applying the electromagnetic energy to a blank being shaped from the fibrous reinforcing material to rigidize the blank into the desired rigid three-dimensional preform, and to an apparatus for making a rigid three-dimensional preform, comprising: means for applying a binder being curable by electromagnetic energy to a fibrous reinforcing material, means for forming a blank of the fibrous material into a predetermined shape of the preform and means for applying electromagnetic energy to the shaped blank to rigidize the blank into the desired rigid three-dimensional preform.

Moreover the present invention relates to a method and to an apparatus for making structural reinforcement preforms for resin transform molding (RTM) and reaction injection molding (SRIM) processes for structural composites, and is further particularly concerned with the handling of reinforcement webs used in the process and in attaching reinforcement members and the like as a part or parts of the preforms.

A method of producing a mat of fibrous material is disclosed in EP-A-0 178 679, wherein a stitching is proposed by bonding or welding of the fibres at predetermined locations by using laser energy, jets of hot air or flames. This known method, however, does ot use any binder material and does not provide for a further rigidization of the fibrous material for providing a rigid form or preform.

In making preforms according to a directed fiber process, it has heretofore been the practice to spray chopped fibers with a binder resin onto a form that has air pulled therethrough to locate and hold the fibers in place. The form with the fibers and the binder resin thereon is then moved into a hot air plenum chamber, dried and/or cured to set the binder resin. In addition, a great deal of processing space is required for drying, curing and cooling the preforms.

In making thermoformed preforms, it has heretofore been the practice to use a continuous strand fiber mat that has been previously coated by the fiber manufacturer with a thermoplastic binder. The thermoformable mat is supplied in a roll form whereby it is unrolled into flat sheets of varied layer thicknesses and clamped into a holding frame at the edges. The frame network is then positioned in an oven chamber containing radiant heaters which slowly heat the reinforcement mat and the thermoplastic binder from both sides. Upon heating, the thermoplastic binder softens and, while soft, the frame network is quickly transferred into a cold mold. The mold closes via a press forcing the reinforcement mat into the desired shape of a part. Upon cooling, the thermoplastic binder stiffens and thus holds the thermoformable mat in its new shape.

These previously used processes are slow, require a great deal of space and a large amount of energy.

As also pointed out, in conventional RIM/SRIM process applications for structural components, fiber layer thickness across the entire preform is increased to meet the strength requirements of one area, which results in unnecessary use of material in other areas and increases thickness and weight. Furthermore, neither the directed fiber process nor the thermoformable mat process allows a designer to add ribs or closed sections to maximize design properties.

As is disclosed in EP-A-0 431 442, being the basis of the preamble of the independent claims, the applicant of the present invention has already proposed a system which eliminates the necessity for large rooms and constantly operating ovens, cooled presses and the like and permits design flexibility with respect to the provision of reinforcement ribs, close sections, and reinforcement and/or attachment members while at the same time saving on energy and materials.

The known process utilizes specifically-developed binders along with directed energy systems for rigidizing the composite forms and attaching structural components to the preforms and is entirely compatible with RTM and SRIM resin systems, i.e. polyesters, vinyl esters, urethanes, epoxies, phenolics and acrylics. The process is designed to be fully automated and to enable specific distribution and placement of numerous type of reinforcements, were necessary for the rquired structural properties of a preform. There is a complete freedom of design inherent in the process and allows for the most desirable reinforcement type and/or structures including closed structural shapes and varied wall sections to meet design criteria.

In the known process, mats of reinforcement material are cut into a desired shape as a two-dimensional planar developement of a desired preform. The cut mats are then coated with a binder which is responsive to electromagnetic energy, either microwave radiation or ultraviolet radiation, and the cut mats are placed in a three-dimensional mold and pressed to replicate the desired shape of the preform.

While in the mold, the coated and shaped mats are subjected to the appropriate electromagnetic radiation, either microwave or ultraviolet radiation, to cure the binder resin and provide rigidity in a matter of seconds, rather than minutes or hours as with the heat-curable processes. At this point, the preform is a finished product for use in a further molding operation (RTM, SRIM) or may be viewed as a carrier preform for the attachment of structural reinforcement members and the like before being used in a further molding operation (RTM, SRIM).

As a carrier preform, the rigid three-dimensional preform is removed from the mold to a station where a designated area or areas of the preform or of a subassembly (reinforcmement rib) are provided with a further coating of an electromagnetic energy curable binder resin, the subassembly (reinforcement member or the like) is moved into intimate contact with the preform at the coated area or areas and the appropriate electromagnetic radiation is applied to energetically stitch (cure the binder) the subassembly to the carrier preform. When the final attachment has been made by such energetic stitching, the preform is a finished product in itself ready for use as a structural reinforcement preform as a part of a further molding process for making a structural composite.

As a structural reinforcement preform the structure is hollow as the walls are permeable to the pressure-applied material during RTM/SRIM processing so that any pocket or chamber could fill with the plastic molding material causing waste, incrased weight and a longer curing time. Therefore, a core may be inserted in any such pocket or chamber to prevent or at least minimize such an event. The core may be held in place by a subassembly (cover) energetically stitched to the preform.

From WO-A-91/10547 there is known another process of forming fiber reinforced molded plastic articles and preforms therefor using a photosetting binder, which includes the steps of applying a layer of reinforcing fibers, preferably glass fibers, on a preform mold surface which has a configuration corresponding to at least a portion of the final molded article, coating the fibers with an ultraviolet light curable composition which contains a photohardenable material polymerizable under UV light and a polymerization photoinitiator, exposing the coated fibers to UV light to cure the composition, and removing the resulting preform from the preform mold surface. The preform is subsequently used by placing it and a deformable plastic material in a mold, where an article containing the plastic reinforced by the fibers is formed.

It is therefore the object of the present invention to provide an improved method and apparatus for making rigid three-dimensional preforms in which the handling and manipulation of the initial material is simplified with respect to those methods and apparatuses heretofore known. Another object of the invention is to provide for robotic handling of the webs of fibrous reinforcing material and the cut mats and of the preforms and, if necessary, reinforcement elements at the respective locations prior to and after the molding and curing of the preforms.

According to the invention these objects are achieved by a method of the above-mentioned type which is caracterized in that the method further comprises the following steps: moving a plurality of webs of fibrous reinforcing material along respective paths and guiding the webs superposed such that they superpose parallel to each other at a predetermined location and travel parallel to and in contact with one another; applying the uncured electromagnetic radiation-curable binder to at least one surface of each pair of facing surfaces of the webs upstream of the predetermined location; locally applying the electromagnetic radiation into selected spaced locations of the parallel contacting webs to cure the binder at the spaced locations and thereby tack the webs together; cutting the blank of predetermined shape from the tacked webs of fibrous reinforcing material; forming the blank into a desired three-dimensional shape of the preform; and applying the electromagnetic radiation to the shaped blank to cure the remaining uncured binder.

According to the invention these objects are further achieved by an apparatus of the above-mentioned type which is characterized in that it further comprises: means for moving a plurality of webs of fibrous reinforcing material along respective paths and guiding the webs superposed coplanarily and parallel to one another at a predetermined location and in contact with one another; means for applying the uncured electromagnetic energy-curable binder to at least one surface of each pair of facing surfaces of the webs upstream of the predetermined location; means for pressing the parallel contacting, moving webs together to spread the binder and increase the permeation thereof into the webs; means for locally applying the electromagnetic radiation into selected spaced locations of the pressed contacting webs to cure the binder and thereby tack the webs together at said selected spaced locations; means for cutting the blank of a predetermined shape from the webs of fibrous reinforcing material; means for forming the blank of the plurality of webs into the desired three-dimensional shape of the preform; and means for applying the electromagnetic radiation to the shaped blank to cure the remaining uncured binder.

According to the present invention, the webs of reinforcement material, such as glass fiber material, are unrolled from roll goods of such material and guided superposed to a pressing or compaction device. Between the supply of roll goods and the pressing or compaction device, at least one surface of each pair of facing surfaces of the superposed webs has an electromagnetic energy curable binder resin applied thereto, as by spraying. In the pressing or compaction device the superposed layers are pressed together to spread and permeate the binder resin into the webs and into greater contact with the binders thereof. The webs then move through an energetic basting station where the appropriate electromagnetic energy is applied thereto at selected spaced locations so as to cure the binder resin at corresponding selected spaced zones through the multilayer structure thereby basting or tacking the webs together while leaving large areas or zones of remaining uncured binder resin for subsequent curing during the molding process. Next, the superposed and basted webs are moved to a net shape pattern cutting station at which the multilayer structure is cut into a desired shape which is a two dimensional planar development of the three-dimensional preform. The basting head may also be mounted with the cutting head and cyclically operated to baste during the cutting process. After cutting, the individual cut mats are advantageously packed up by a robot and positioned on a mold plug of the male half of a mold which has a complementary mold cavity in a female half of the mold. The mold is then closed to press the mat into the desired three-dimensional shape of the preform and the mold is then energized with the appropriate electromagnetic energy to cure the remaining binder resins and rigidize the shaped mat into the desired rigid three-dimensional preform.

It was found that the invention process is improved, particularly with respect to the handling of the reinforcement material prior to bonding in that a plurality of layers of reinforcement material need not to be individually cut into the desired shape and individually stacked in registry in the mold. With such layers tacked together prior to cutting (termed energetic basting), so that the cut layers are essentially a single element, handling is simplified in that registration of the layers is then inherent.

According to the invention the binder can be applied and the layers tacked together, prior to cutting, so that there is no necessity of later applying binder resin to individual layers after cutting.

Inventively the layers of reinforcement material may be drawn as webs from roll goods, the binder resin applied and the webs superposed and tacked together (energetically basted) at spaced local zones prior to cutting by selective curing of such zones with the remaining uncured binder resin available for later curing and rigidizing a shaped element in the mold.

According to the invention the mats of cut shapes for molding into a rigid three-dimensional form are tacked together and handled as a single mat, and the tacking of the webs together is accomplished, prior to cutting, by energetic basting of spaced local zones of superposed webs carrying an electromagnetic energy-curable resin, with the remaining uncured binder resin outside of the zones available for later use in the three-dimensional molding process.

The mold may comprise in each of its male and female parts, half of a joinable waveguide for directing electromagnetic energy, such as microwave energy, to cure the binder resin. Alternatively, each half of the mold may include an ultraviolet lamp or lamps for curing ultraviolet responsive binder resins. In this case, the mold is constructed, at least at its facing mold surfaces, as a wire screen or from an ultraviolet transmissive material, such as a clear acrylic which does not contain ultraviolet blockers.

Furthermore there can be provided energetic stitching of reinforcement members to the inside and/or outside of the hollow three-dimensional preforms and including the provision of a cover for such a hollow preform, these elements being attached by energetic stitching.

After molding, the rigidized three-dimensional preform is removed from the mold and manipulated by robotic devices as a carrier preform for the attachment of reinforcement members. In this case advantageously the method according to the invention is characterized in that it comprises the following steps: forming a rigid preform of a desired shape, applying a binder curable by the application of a selected electromagnetic energy, such as microwave energy, ultraviolet energy or electron beam energy to the preform, applying a reinforcement member to the preform, and applying said electromagnetic energy to the binder at predetermined select locations to stitch the reinforcement member to the preform to rigidly join the preform and reinforcement member. An apparatus for performing this advantageous method is characterized in that it comprises means for applying a binder curable by the application of a selected electromagnetic energy, such as microwave energy, ultraviolet energy or electron beam energy, to the preform, means for applying a reinforcement member to the preform, and means for applying said electromagnetic energy to the binder at predetermined select locations to stitch the reinforcement member to the preform joining the preform and reinforcement member rigidly. In this part of the process, the carrier preform is oriented to a desired position, a surface area or areas thereof is or are sprayed with a binder resin, such as an ultraviolet curable binder resin, a reinforcement rib or the like is moved into intimate contact with the sprayed area or areas and the sprayed area or areas is or are then illuminated with electromagnetic energy, here ultraviolet energy, to cure the binder resin. The cured binder resin bonds the reinforcement member to the carrier preform. This attaching of reinforcement members, termed energetic stitiching, may take place several times to provide reinforcement ribs inside the three-dimensional shape, outside the three dimensional shape on the outer surface thereof and/or to add a cover which closes the hollow three-dimensional structure.

After the final reinforcement member is attached, the preform may be stored or moved to a molding station of an RTM or an SRIM molding process.

### ON THE DRAWINGS

Other objects, features and advantages of the invention, its organization, construction and operation will be best understood from the following detailed description, taken in conjunction with the accompanying drawings, on which:
FIG. 1 is an elevation view of the processing stations of one embodiment of an entire preform making process;
FIG. 2 is a somewhat more detailed perspective view of the reinforcement material supply, binder application and compaction portions of the system of FIG. 1;
FIG. 3 is a somewhat more detailed view of the process, shown in perspective, from the output of the compaction device and including, in particular, one embodiment of the energetic basting structure;
FIG. 4 is a sectional view taken through an energetic basting location;
FIG. 5 is a somewhat exploded view of three webs which have undergone energetic basting;
FIG. 6 is a perspective view of another portion of the process of FIG. 1 showing the pattern cutting structure;
FIG. 7 is a perspective view of another portion of the process of FIG. 1 showing, in particular, the molding apparatus receiving a cut blank from the cutting apparatus;
FIG. 8 is a perspective view showing the mold in a closed condition with the cut blank formed into the desired shape;
FIG. 9 is a perspective view, shown partially cut away, similar to FIG. 8 and further illustrating the provision of high-intensity ultraviolet radiation;
FIG. 10 is a perspective view showing the mold in an open condition with the rigid shaped preform removed from the mold and ready for transport for subsequent processing;
FIG. 11 is a perspective view of a portion of the process of FIG. 1 illustrating one embodiment of energetic stitching of an outer reinforcement rib to the preform of FIG. 10 by ultraviolet techniques in which the binder is applied to the preform; alternatively it could be applied to the rib;
FIG. 12 is a view of energetic stitching apparatus similar to that of FIG. 11, but showing the energetic stitching of an internal reinforcement rib by ultraviolet techniques;
FIG. 13 is another perspective view of energetic stitching apparatus, similar to that of FIGS. 11 and 12, showing the energetic stitching of an elongate internal longitudinal reinforcement rib by ultraviolet techniques;
FIG. 14 is a view similar to that of FIG. 13 and showing the energetic stitching of the elongate internal reinforcement rib by way of microwave techniques;
FIG. 15 is a perspective view of another embodiment of energetic stitching using microwave techniques showing the addition and stitching of a cover for closing the hollow preform;
FIG. 16 is a perspective view of another embodiment of energetic stitching apparatus using ultraviolet energy for attaching the cover to the preform;
FIG. 17 is a perspective view, again beginning at the output of the compaction device, showing another embodiment of the invention in which the energy for energetic basting may be generated by a high-intensity ultraviolet generator or an electron beam gun; and
FIG. 18 is a perspective view of another embodiment of the invention beginning at the output of the compaction stage and illustrating energetic basting apparatus in which the energy for energetic basting is supplied by a microwave generator and directed and focused by a split waveguide.

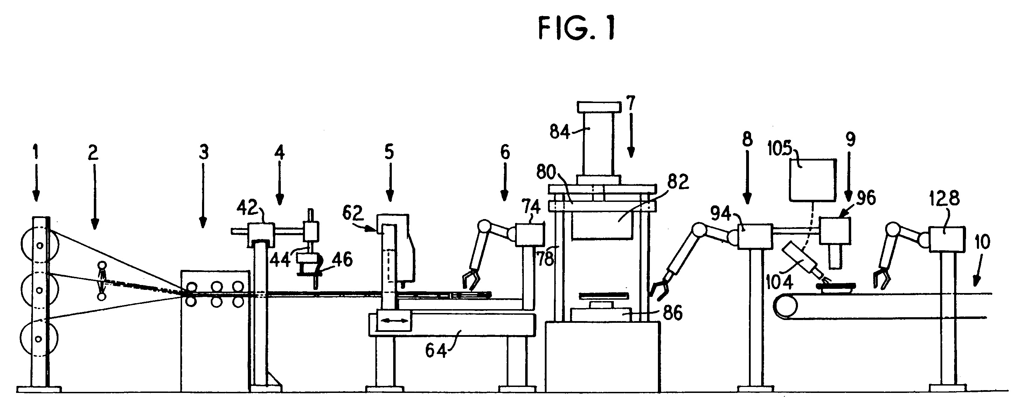

Referring to FIG. 1, a process for making rigid three-dimensional preforms is illustrated as comprising a plurality of process stations or stages 1--10.

At the supply stage 1, a plurality of rolls of reinforcement material, such as glass fiber continuous strand, chopped strand, woven fabric mat or the like is mounted for dispensing a like plurality of webs of the material superposed with respect to one another toward a compaction stage 3 where the webs are received, guided and directed coplanar with respect to one another.

Between the supply stage 1 and the compaction stage 3 is a binder application stage 2 in which an electromagnetic radiation-curable binder resin is applied to at least one surface of each pair of facing surfaces of the webs. Here, the binder may be applied to the upper and lower surfaces of the middle web, but may also be applied to the lower surface of the upper web and the upper surface of the lower web or to all of the facing surfaces.

In the pressing or compaction stage 3, the webs are pressed together causing spreading of the binder and permeation of the binder into greater contact areas with the fibers of the webs.

The superposed webs are then fed to an energetic basting station 4 where they are basted or tack welded together at locations spaced longitudinally and transversely of the webs. These spaced locations, as will hereinafter be described, are also considered to be basting zones in that they are three-dimensional and extend to and bind all of the webs.

The webs, basted together to form essentially a single element, are then moved to a net shape pattern cutting stage 5 in which a two-dimensional planar projection or planar development of the three-dimensional desired structure is cut from the web for later forming into the three-dimensional shape of the preform. The shape cut from the multilayer web is hereinafter called a mat and is transferred to a mold stage 7 by way of a material pickup stage 6. At the mold stage 7, the mat is positioned between separable parts of a mold which is then closed causing the mat to assume the contours, i.e. shape, of the three-dimensional preform. At the mold stage 7 and while still in the mold, the shaped mat is subjected to electromagnetic radiation of a type to which the binder resin is sensitive to cure. Upon curing, the shaped mat becomes rigid and is transformed into a rigid three-dimensional preform. Upon opening of the mold, the preform may be removed from the mold stage 7 and transferred to an energetic stitching stage 9 by way of a material handling stage 8, that is if the preform is to be considered a carrier preform for the attachment of reinforcement members or the like. If not, the material handling stage 8 may simply deposit the rigid three-dimensional preform on a conveyor 10 for discharge for storage or for transport to, for example, a resin transfer molding (RTM) process or a reaction injection (SRIM) molding process.

If the preform is to assume the status of a carrier preform, the material handling stage 8 may operate in conjunction with the electromagnetic stitching stage 9 to manipulate the preform into positions as hereinafter described.

In the electromagnetic stitching stage 9, reinforcement members are attached to the carrier preform by spraying an electromagnetic-sensitive binder, as indicated at 104 onto specified locations of the carrier preform and/or the subassembly, the reinforcement rib moved into a desired orientation and into intimate contact with the locations by a material handling device 128 and the locations subjected to electromagnetic radiation by way of an electromagnetic stitching source 96.

There may be a plurality of the material handling devices 128, as needed, in order to handle and stitch a plurality of reinforcement members to the carrier preform.

As indicated on FIG. 1, the material handling stages may comprise a plurality of robots 74, 94, 128 and 105, of which the robot 105 for moving the spray device 104 is symbolically illustrated as connected thereto by mechanical linkage shown by broken lines. Inasmuch as robotics and robotic devices are well known in the art, a detailed explanation thereof is not considered necessary here.

It will be appreciated that the above-described process is continuous and describes a stepped process cycle in which the processing stage with the longest processing time is the controlling stage. Inasmuch as shaping and rigidizing the preform is only a matter of seconds, it is assumed that for most processes, this is not the controlling stage. Depending on the number of reinforcement members added and the nature of the shape of the cut pattern, either of these stages could be considered the controlling stage by which all other processing times and the timing thereof are determined and tailored to the following molding process.

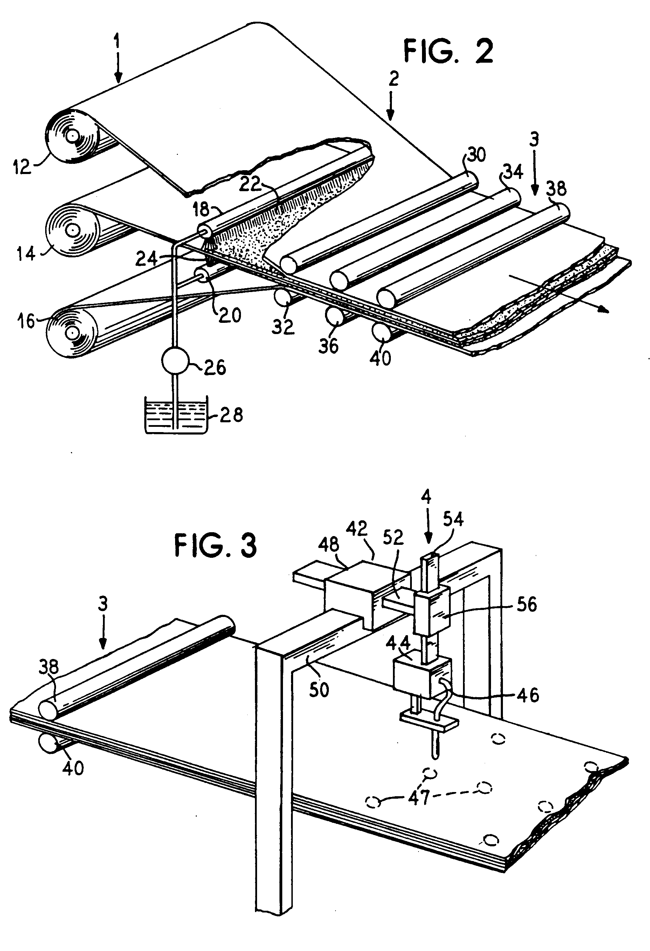

Referring to FIG. 2, a more detailed view of the supply stage 1, the binder application stage 2 and the compaction stage 3 is illustrated. The supply stage 1 is illustrated as comprising a plurality of rolls 12--16 of reinforcement material which are to be dispensed as individual webs in a superposed relation toward a predetermined location at the beginning of the compaction stage 3 at which the webs are aligned to travel coplanar with respect to one another. This is accomplished by a pair of opposed press rollers 30 and 32.

The binder resin spray applicator 2 is illustrated as comprising spray mechanisms 18 and 20 which are fed from a reservoir 28 by way of a pump 26 to provide a mist or cloud 22, 24 between the upper web 12 and the center web 14 and between the center web 14 and the lower web 16. The binder spray coats at least one of the facing surfaces of each pair of facing surfaces with binder resin.

As the superposed webs move through the compaction stage 3, pairs of opposed press rollers 30 and 32; 34 and 36; 38 and 40 press the webs together and spread the binder resin for permeation into the webs and to enlarge the contact area thereof with the fibers of the webs.

Referring to FIG. 3, the coplanar multilayer web structure is illustrated as exiting the compaction stage 3 between the press rollers 38 and 40 and entering the energetic basting station 4.

The energetic basting station 4 comprises a gantry 42 including a member 48 which may be driven transversely above the webs on a beam 50, a member 52 which may be moved with respect to the member 48 in the direction of movement of the webs and opposite thereto, a member 56 carried in cantilever fashion at an end of the member 52 and a member 54 which may be driven perpendicular to the webs through the member 56, the member 54 supporting a source, here an ultraviolet source 44 whose ultraviolet emission is conducted by way of a fiber optic ultraviolet wand 46 toward the upper surface of the webs to cause penetration of the ultraviolet light at a plurality of spaced locations 47. The source may be periodically activated or its emission may be periodically gated to provide curing at spaced zones in the longitudinal direction of the webs. The driving and driven members may include rack and pinion type structures.

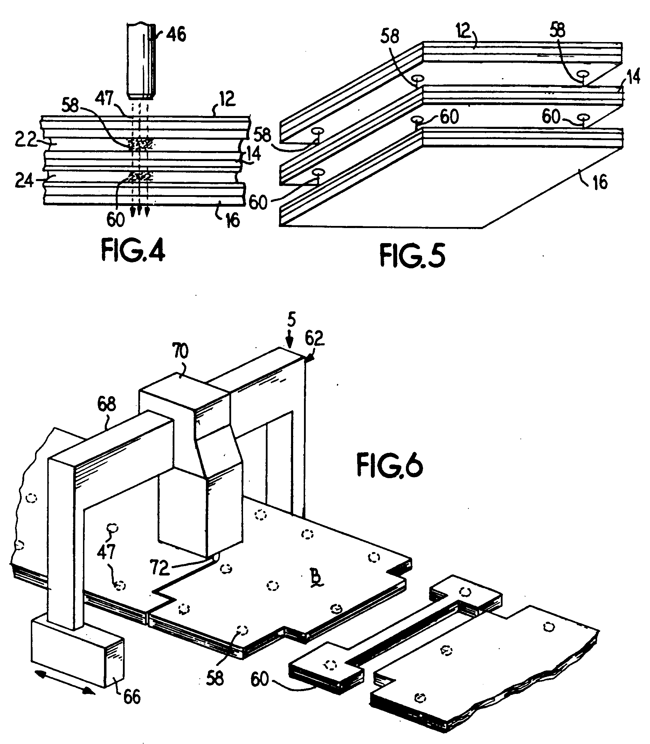

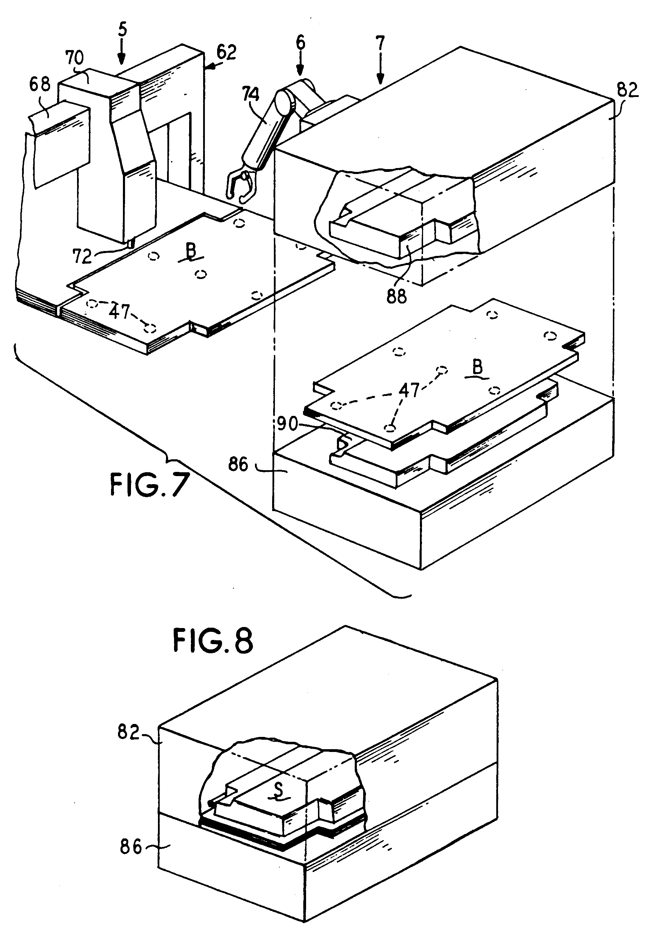

Turning to FIGS. 4 and 5, a fiber optic wand 46 is illustrated in FIG. 4 as directing ultraviolet radiation toward a location 47 and thereat penetrating through the three webs 12, 14 and 16. The binder applied in FIG. 2 by way of the clouds 22 and 24 is illustrated with the same reference characters in FIG. 4 as being between the webs and penetrated by the ultraviolet radiation which cures the binder resin 22 and 24 in respective zones 58 and 60 to bind the webs together at the spaced locations 47. The same bound structure is illustrated in FIG. 5 with the zones 58 and 60 indicated as strands connecting the webs together. Actually, however, the webs are as one at these locations.

Referring to FIG. 6, the basted webs are illustrated as having moved into the net pattern cutting stage 5 where they are cut into basted multilayer mats or blanks B. The cutting stage 5 may comprise a gantry 62 including a transverse member 68 which is mounted for movement longitudinally of the webs on a member 66 which is supported by a table 64 (FIG. 1). A member 70 is movable transversely on the member 68 and comprises a device for cutting the multilayer webs into the desired shapes. The gantry 62 and the device 70 therefore constitute an X-Y pattern cutter which is effective to cut the desired shapes for the mats or blanks B by way of a cutter 72 which may be constituted, for example, by a knife or a laser beam. As mentioned above, the basting head may be mounted on the gantry 62 and periodically operated to baste the webs together.

As indicated above, the driving structures for the elements 48--56 of FIG. 3 and 64--70 of FIG. 6 may be electric motors with rack and pinion output structures or any other suitable devices for providing X, Y, Z or, respectively, X-Y movements.

The cut blanks B are removed from the cutting stage 5 by the material pick up apparatus 74 of the material handling stage 6 and positioned in the mold stage 7. This is shown in greater detail in FIG. 7 in which a cut blank B has been positioned over a lower shaping mold 86 which includes a male mold plug 90 and which is below and in registry with an upper shaping mold 82 which includes a female mold cavity 88 generally conforming to the shape of the male mold plug 90. As shown, another blank B is being cut at the cutting station 5 and the robot 74 has returned to handle that next blank B.

The mold is then closed by operating the ram 84 to lower the crossbar 80 and the upper mold 82 to mate the upper and lower shaping mold parts, as shown in FIG. 8, so that the blank B now assumes the character of a three-dimensional shaped element S which conforms to the desired shape of the rigid three-dimensional preform.

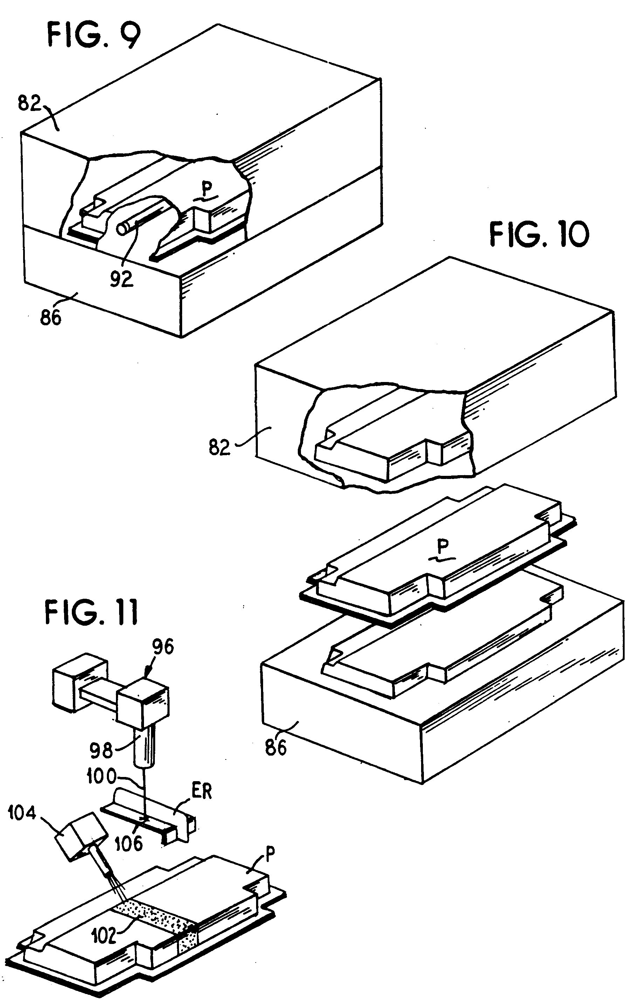

While the mold is closed, and as specifically illustrated in FIG. 9, the shaped element S is subjected to electromagnetic radiation, here in the form of high-intensity ultraviolet radiation to cure the remaining binder resin which was not cured during energetic basting at the energetic basting stage 4. In order to provide the ultraviolet radiation, at least the facing walls of the molds 82 and 86 are formed with an ultraviolet transmissive material, such as a wire grid or a clear acrylic. In addition to the single lamp 92 illustrated in FIG. 9, a plurality of such lamps may be provided in the male mold plug and/or peripherally about the female mold cavity. After curing, the molded element is a rigid three-dimensional preform P which may be moved from the mold stage 7 and deposited on the conveyor 10 to transport the same for storage or for use in a further molding process as set forth above.

Referring to FIGS. 1 and 10, in order to remove the preform P, the ram 84 is operated to raise the crossbar 80 and the upper mold 82 to separate the mold 82 from the mold 86. The robot 94 may then pick up the preform P, as illustrated in FIG. 10, to move the preform P either to the conveyor 10 or to the energetic stitching station 9.

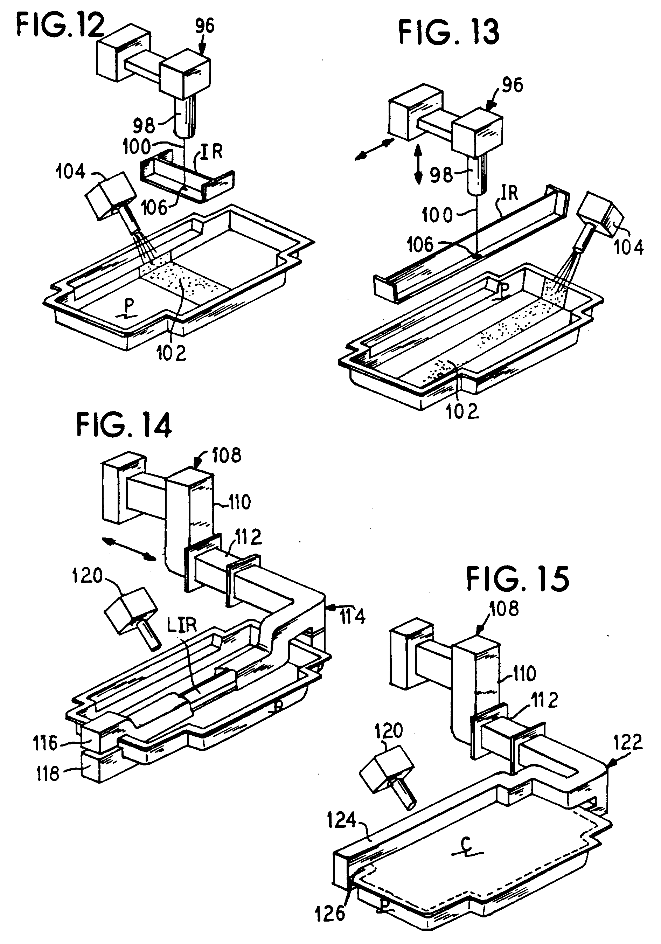

Assuming that the preform P is now considered to have the status of a carrier preform, the preform P is moved to the energetic stitching stage 9 (FIG. 1). At this station, the robot 94 of the material handling stage 8 may hold the preform P in the position illustrated in FIG. 11. While in this position, a robot 105 manipulates a binder applicator 104 to spray and electromagnetic energy-curable binder on an area 102 at a location at which an external reinforcement rib ER is to be attached and/or on the matching surface of the reinforcement rib. Then, a robot 128 (FIG. 1) or another suitable manipulator orients the member ER into position transversely of the preform P and into intimate contact with the sprayed area 102. Then, a robot 96 positions an electromagnetic stitcher into place which in FIG. 11 is constituted by an ultraviolet generator 98 for producing an ultraviolet beam 100, and to direct the same onto an area 106 or, preferably, a plurality of such areas along the rib ER, to cure the binder thereat and energetically stitch the rib ER to the preform P.

The robot 94 may then rotate the preform P 180° and the same steps then performed for an internal reinforcement rib IR to energetically stitch the same with the cavity of the carrier preform P. As shown in FIG. 12, this is an almost identical operation to that shown in FIG. 11 for the external rib ER. The robot gantry 96 may be moved, in either case, to scan along the length of the rib and energetically stitch the respective rib to the carrier preform at a plurality of the locations 106.

Alternatively or in addition to the internal rib IR being applied, the robot 105 may manipulate the binder spray device 104 to spray an elongate area along the inner surface of the carrier preform P and/or a matching surface of the internal rib IR. In this case, the robot 128 or similar manipulator picks up and moves an appropriate shaped elongate internal reinforcement member LIR into intimate contact with the preform P at the sprayed area and the ultraviolet beam 100 scans that area or a plurality of locations 106 thereof for stitching the member LIR to the interior of the carrier preform P.

As an alternative embodiment, reference taken to FIG. 14 which illustrates the same basic structure as FIG.13, with the exception of the application of the electromagnetic energy. In FIG. 14, the robot 105 manipulates a binder spray device 120 which sprays a microwave-sensitive binder along the area 102 and/or a matching area on the rib LIR, the robot 128 positions the rib LIR into intimate contact with the preform P at the sprayed area and microwave energy is supplied from a robot manipulated device 108 carrying a microwave generator 110 which is coupled at 112 to a split waveguide 114 including an upper waveguide section 116 and a lower waveguide section 118. As shown, the waveguide sections 116 and 118 together form a single waveguide shaped to conform to the shape of the carrier preform P with the reinforcement rib LIR in place and some mechanism robot or the like (not shown) must be provided to open and close the waveguide 114.

Sometimes it is desirable to close the hollow structure of the preform or of the carrier preform P including any core material therein to block filling with resin during the following molding process. In this case, and as shown in FIGS. 1 and 15, the robot 128 or similar manipulator picks up a cover C and positions the same in registry with the preform P. The robot 94 and possibly additional robots may then grasp and position a portion of the edges of the assembly, after spraying the marginal edge or flange of the preform P and/or of the cover C with a microwave-sensitive binder resin, into a slotted waveguide 122 having an upper section 124 and a lower section 126. The carrier preform has now been stitched closed and may include core material and/or one or more internal reinforcement ribs of the type illustrated in FIGS. 12 and 13. In addition, it may include or be manipulated and stitched to include one or more external ribs ER of the type illustrated in FIG. 11.

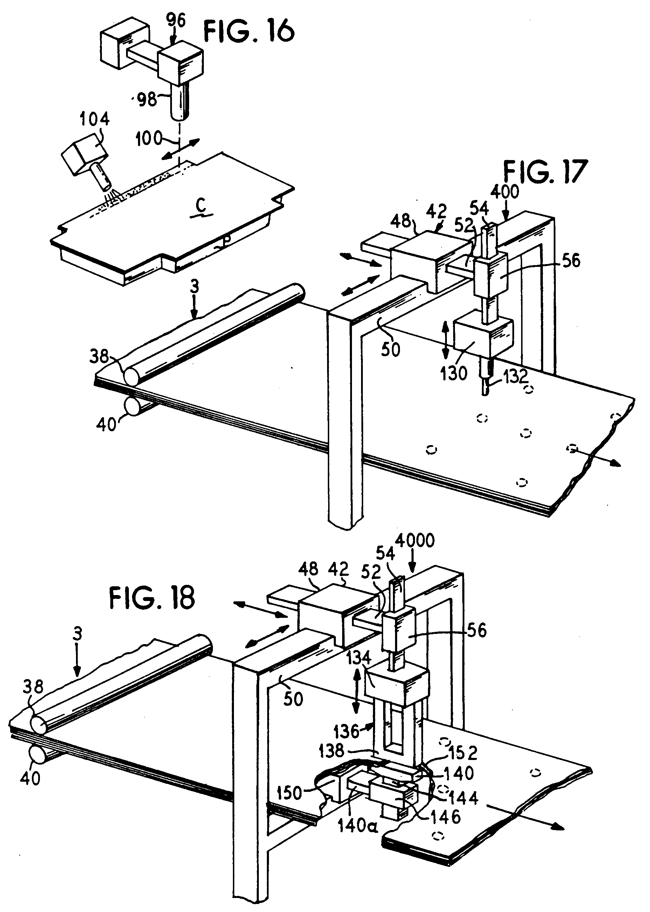

FIG. 16 illustrates a similar cover stitching procedure in which the binder spray 104 is manipulated to spray ultraviolet-sensitive binder resin along the marginal edge or flange of the preform P and/or a cover C and the cover C is manipulated into proper position and the two elements are stitched together with an energetic stitching bead 98 which is positional by way of the gantry 96 to stitch around the entire periphery of the assembly.

As mentioned above, the energetic basting and stitching procedures, in fact all such attachment procedures, may be performed by various types of radiating elements, including microwave, ultraviolet and electron gun.

Referring now to FIG. 17, an energetic basting station 400 is illustrated at the output of the compaction stage 3. The energetic basting station 400, in this embodiment, comprises a gantry 42 having the same structure as that illustrated in FIG. 3 with the exception that the fiber optic wand 46 is not employed. Here, an ultraviolet laser 130 is excited to emit an ultraviolet laser beam 132 for curing the binder at the spaced locations 47.

In place of the ultraviolet laser generator, an electron gun could be employed, assuming the binder resin would be curable (free electron bonding) in response to the electron beam.

Another embodiment of energetic basting is illustrated in FIG. 18 at an energetic basting station 4000 located at the output of the compaction stage 3. Here again, the gantry 42 is illustrated and operates in the same manner as that of FIG. 3 to position an energetic basting applicator in three coordinate directions. In this embodiment, however, the source of electromagnetic energy is a source 134 of microwave energy which is coupled to a waveguide 136 having an upper section 138 and a lower section 140. The lower section 140 is carried by a member 144 which is vertically movable in an actuator 146 carried by a member 140a which is longitudinally movable in an actuator 150 carried on a transverse beam 152, mounted parallel to the beam 50, but below the webs on the gantry 42.

In summary, the present invention provides a process for making rigid three-dimensional preforms using reinforcement materials such as glass fiber webs coated with a binder resin. The webs are drawn from respective rolls of reinforcement material and superposed and directed such that they travel toward a common location at which they are guided so as to travel parallel with respect to one another. Before becoming parallel, the superposed webs have a binder resin of electromagnetic energy-curable material applied, as by spraying, to at least one surface of each pair of facing surfaces and, after becoming parallel, are pressed together to distribute the binder resin and increase the contact area thereof with the fibers of the reinforcement material. The binder resin cures in response to the application of a selected electromagnetic energy, such as microwave energy, ultraviolet energy or electron beam energy. After being pressed together, the webs travel to an energetic basting station where the selected electromagnetic energy is applied to spaced zones through the multilayer web structure to bind those zones and tack the webs together so that they proceed as they were a single web. The electromagnetic basting may occur through the application of the selected energy by way of an ultraviolet wand, and ultraviolet laser, microwave via a split microwave waveguide or an electron beam gun. Next, the basted web is cut into mats having shapes each corresponding to a two-dimensional planar development of the three-dimensional shape of the desired rigid three-dimensional preform. A cut mat is then transferred to a mold where it is formed into the three-dimensional shape of the preform between complementary-shaped upper and lower molds. The molds are constructed of material which is transmissive to the selected electromagnetic energy and are operable therewith to cause curing of the uncured binder resin remaining after basting of the spaced zones and to cause the shaped mat to become rigid, thus resulting in the desired rigid three-dimensional preform. At this time, the preform may be utilized in a further molding process or may be considered as a carrier preform to which a subassembly or subassemblies (reinforcement elements and/or mounting members) are energetically stitched by applying an electromagnetic energy curable binder resin to a selected location or locations, moving the subassembly into intimate contact with the preform at those selected locations on the preform and/or on the subassembly and applying selected electromagnetic radiation to those locations to cure the binder and attach the reinforcement member. These last steps may be multiplied or repeated to attach a plurality of subassemblies including a cover member which closes the hollow shaped of the preform to hold a core therein. After all of the reinforcement and/or mounting members are attached, the resulting preform may be transferred to a further molding process.

Although the invention was described by reference to particular illustrative embodiments thereof, many changes and modifications of the invention may become apparent to those skilled in the art without departing from the spirit and scope of the invention. It is therefore intended to include within the patent warranted hereon all such changes and modifications as may reasonably and properly be included within the scope of the following claims.

## Claims

1. A method of making a rigid three-dimensional preform (P), wherein a binder (22, 24) being curable by electromagnetic energy is applied to fibrous reinforcing material and the binder (22, 24) is cured by applying the electromagnetic energy to a blank (B) being shaped from the fibrous reinforcing material to rigidize the blank (B) into the desired rigid three-dimensional preform (P), characterized in that the method further comprises the following steps: moving a plurality of webs of fibrous reinforcing material along respective paths and guiding the webs superposed such that they superpose parallel to each other at a predetermined location (3, 4) and travel parallel to and in contact with one another; applying the uncured electromagnetic radiation-curable binder (22, 24) to at least one surface of each pair of facing surfaces of the webs upstream of the predetermined location (3); locally applying the electromagnetic radiation into selected spaced locations (47) of the parallel contacting webs to cure the binder (22, 24) at the spaced locations (47) and thereby tack the webs together; cutting the blank (B) of predetermined shape from the tacked webs of fibrous reinforcing material; forming the blank (B) into a desired three-dimensional shape of the preform (P); and applying the electromagnetic radiation to the shaped blank (B) to cure the remaining uncured binder (22, 24).

2. The method of claim 1, characterized in that the step of forming is further defined as placing the blank (B) between first and second shaped parts (82, 86) of a tool, which parts are shaped to replicate the desired three-dimensional shape of the preform (P), and pressing the two parts (82, 86) of the tool together to shape the blank (B) while applying the electromagnetic energy to cure the binder (22, 24).

3. The method of claim 1, characterized in that the steps of applying the binder resin (22, 24) and locally applying electromagnetic radiation are respectively further defined as applying an uncured ultraviolet energy-curable binder to at least one surface of each pair of facing surfaces of the webs, and locally applying ultraviolet radiation into the selected locations (47).

4. A method of making a rigid three-dimensional reinforced preform according to claims 1, 2 or 3, characterized in that it further comprises the following steps: forming a rigid preform (P) of a desired shape, applying a binder curable by the application of a selected electromagnetic energy, such as microwave energy, ultraviolet energy or electron beam energy, to the preform (P), applying a reinforcement member (ER, IR, LIR) to the preform (P), and applying said electromagnetic energy to the binder at predetermined select locations (106) to stitch the reinforcement member (ER, IR, LIR) to the preform (P) to rigidly join the preform (P) and reinforcement member (ER, IR, LIR).

5. A method according to claim 4 characterized in that it comprises the following steps: applying the binder material curable by the application of a selected electromagnetic energy, such as microwave energy, ultraviolet energy or electron beam energy, at predetermined select locations (102) on the preform (P), and applying said electromagnetic energy to the binder to stitch the reinforcement member (ER, IR, LIR) to the preform (P) at the locations (106) of the binder applications for joining the reinforcement member (ER, IR, LIR) and the preform (P) in a rigid unit.

6. Apparatus for making a rigid three-dimensional preform (P), comprising: means (2) for applying a binder (22, 24) being curable by electromagnetic energy to a fibrous reinforcing material, means (5) for forming a blank (B) of the fibrous material into a predetermined shape of the preform (P) and means (7) for applying electromagnetic energy to the shaped blank to rigidize the blank (B) into the desired rigid three-dimensional preform (P), characterized in that it further comprises: means (1) for moving a plurality of webs of fibrous reinforcing material along respective paths and guiding the webs superposed coplanarily and parallel to one another at a predetermined location (3, 4) and in contact with one another; means (2) for applying the uncured electromagnetic energy-curable binder (22, 24) to at least one surface of each pair of facing surfaces of the webs upstream of the predetermined location; means (3) for pressing the parallel contacting, moving webs together to spread the binder and increase the permeation thereof into the webs; means (4) for locally applying the electromagnetic radiation into selected spaced locations of the pressed contacting webs to cure the binder (22, 24) and thereby tack the webs together at said selected spaced locations (47); means (5) for cutting the blank (B) of a predetermined shape from the webs of fibrous reinforcing material; means (7) for forming the blank of the plurality of webs into the desired three-dimensional shape of the preform (P); and means (7) for applying the electromagnetic radiation to the shaped blank (B) to cure the remaining uncured binder (22, 24).

7. Apparatus in accordance with claim 6, characterized in that it further comprises molding means (7) with a mold operable to receive and press the blank (B) into the desired three-dimensional preform (P) shape.

8. Apparatus in accordance with claim 6, characterized in that said means (2) for applying a binder (22, 24) applies an ultraviolet energy-curable binder.

9. Apparatus for making a rigid three-dimensional reinforced preform according to claims 6, 7 or 8, characterized in that it further comprises means (120) for applying a binder curable by the application of a selected electromagnetic energy, such as microwave energy, ultraviolet energy or electron beam energy, to the preform (P), means for applying a reinforcement member (ER, IR, LIR) to the preform (P), and means (110) for applying said electromagnetic energy to the binder at predetermined select locations (106) to stitch the reinforcement member (ER, IR, LIR) to the preform (P) joining the preform (P) and reinforcement member (ER, IR, LIR) rigidly.

10. Apparatus in accordance with claim 9, characterized in that said means for applying binder is formed to apply the binder at predetermined select locations (102) to the preform (P), and said means (110) for applying said electromagnetic energy applies the energy to the binder at said locations (106) to stitch the reinforcement member (ER, IR, LIR) to the preform (P).

## Patentansprüche

1. Verfahren zur Herstellung einer starren, dreidimensionalen Vorform (P), wobei ein Bindemittel (22, 24), welches durch elektromagnetische Energie härtbar ist, auf faseriges Verstärkungsmaterial aufgebracht wird und das Bindemittel (22, 24) durch Anwendung der elektromagnetischen Energie auf einen Zuschnitt (B), welcher aus dem faserigen Verstärkungsmaterial geformt ist, gehärtet wird, um den Zuschnitt (B) zu der gewünschten starren, dreidimensionalen Vorform (P) zu versteifen, dadurch gekennzeichnet, daß das Verfahren weiters die folgenden Schritte umfaßt: Bewegen einer Vielzahl von Bahnen des faserigen Verstärkungsmaterials entlang entsprechenden Wegen und Führen der derart übereinander angeordneten Bahnen, daß sie sich parallel zueinander an einer vorbestimmten Position (3, 4) überdecken und sich parallel zueinander und in Kontakt miteinander bewegen; Aufbringen des nicht gehärteten, durch elektromagnetische Strahlung härtbaren Bindemittels (22, 24) auf wenigstens eine Oberfläche jeden Paares von einander gegenüberliegenden Oberflächen der Bahnen stromaufwärts der vorbestimmten Position (3); lokales Anwenden der elektromagnetischen Strahlung an ausgewählten, in Abstand voneinander angeordneten Stellen (47) der parallelen, in Kontakt stehenden Bahnen, um das Bindemittel (22, 24) an den in Abstand voneinander angeordneten Stellen (47) zu härten und dadurch die Bahnen miteinander zu verbinden; Schneiden des Zuschnitts (B) mit vorbestimmter Form aus den aneinander anhaftenden Bahnen aus faserigem Verstärkungsmaterial; Formen des Zuschnitts (B) in eine gewünschte dreidimensionale Form der Vorform (P); und Anwenden der elektromagnetischen Strahlung auf den geformten Zuschnitt (B), um das verbleibende, nicht gehärtete Bindemittel (22, 24) zu härten.

2. Verfahren nach Anspruch 1, dadurch gekennzeichnet, daß der Schritt des Formens weiters definiert ist als ein Anordnen des Zuschnitts (B) zwischen ersten und zweiten geformten Teilen (82, 86) eines Werkzeuges, welche Teile geformt sind, um die gewünschte dreidimensionale Vorform (P) wiederzugeben, und Pressen der zwei Teile (82, 86) des Werkzeuges aufeinander, um den Zuschnitt (B) zu formen, während die elektromagnetische Energie angewandt wird, um das Bindemittel (22, 24) zu härten.

3. Verfahren nach Anspruch 1, dadurch gekennzeichnet, daß die Schritte der Aufbringung des Bindemittelharzes (22, 24) und der lokalen Anwendung der elektromagnetischen Strahlung weiters definiert sind als ein Anwenden eines nicht gehärteten, mit Ultraviolett-Energie härtbaren Bindemittels auf wenigstens einer Oberfläche jeden Paares von einander gegenüberliegenden Oberflächen der Bahnen und ein lokales Anwenden ultravioletter Strahlung in den ausgewählten Stellen (47).

4. Verfahren zur Herstellung einer starren, dreidimensionalen, verstärkten Vorform nach den Ansprüchen 1, 2 oder 3, dadurch gekennzeichnet, daß es weiters die folgenden Schritte umfaßt: Formen einer starren Vorform (P) einer gewünschten Form; Aufbringen eines Bindemittels, welches durch Anwendung einer ausgewählten, elektromagnetischen Energie, wie Mikrowellen-Energie, Ultraviolett-Energie oder Elektronenstrahl-Energie, härtbar ist, auf die Vorform (P); Aufbringen eine Verstärkungselementes (ER, IR, LIR) auf die Vorform (P) und Anwenden der elektromagnetischen Energie auf das Bindemittel an vorbestimmten, ausgewählten Stellen (106), um das Verstärkungselement (ER, IR, LIR) an die Vorform (P) zu heften, um die Vorform (P) und das Verstärkungselement (ER, IR, LIR) starr zu verbinden.

5. Verfahren nach Anspruch 4, dadurch gekennzeichnet, daß das es weiters die folgenden Schritte umfaßt: Aufbringen des Bindemittelmaterials, welches durch die Anwendung einer vorbestimmten, elektromagnetischen Energie, wie Mikrowellen-Energie, Ultraviolett-Energie oder Elektronenstrahl-Energie, härtbar ist, an vorbestimmten, ausgewählten Stellen (102) auf der Vorform (P), und Anwendung der elektromagnetischen Energie auf das Bindemittel, um das Verstärkungselement (ER, IR, LIR) an die Vorform (P) an den Stellen (106) der Aufbringung des Bindemittels zu heften, um das Verstärkungselement (ER, IR, LIR) und die Vorform (P) zu einer starren Einheit zu verbinden.

6. Vorrichtung zur Herstellung einer starren, dreidimensionalen Vorform (P), umfassend: Mittel (2) zum Aufbringen eines Bindemittels (22, 24), welches durch elektromagnetische Energie härtbar ist, auf ein faseriges Verstärkungsmaterial, Mittel (5) zur Formung eines Zuschnitts (B) des Fasermaterials in eine vorbestimmte Form der Vorform (P) und Mittel (7) zum Anwenden elektromagnetischer Energie auf den geformten Zuschnitt, um den Zuschnitt (B) in die gewünschte starre, dreidimensionale Vorform (P) zu versteifen, dadurch gekennzeichnet, daß sie weiters umfaßt: Mittel (1) zum Bewegen einer Vielzahl von Bahnen von fasrigem Verstärkungsmaterial längs entsprechenden Wegen und Führen der Bahnen coplanar übereinander angeordnet und parallel zu einander zu einer vorbestimmten Position (3, 4) und in Kontakt miteinander; Mittel (2) zum Aufbringen des nicht gehärteten, durch elektromagnetische Energie härtbaren Bindemittels (22, 24) auf wenigstens einer Oberfläche jedes Paares von einander gegenüberliegenden Oberflächen der Bahnen stromaufwärts der vorbestimmten Position; Mittel (3) zum miteinander Verpressen der parallelen, in Kontakt miteinander stehenden, bewegten Bahnen, um das Bindemittel zu verteilen und das Eindringen desselben in die Bahnen zu erhöhen; Mittel (4) für ein lokales Anwenden der elektromagnetischen Strahlung an vorbestimmten, in Abstand voneinander angeordneten Stellen der verpreßten, in Kontakt stehenden Bahnen, um das Bindemittel (22, 24) zu härten und dadurch die Bahnen an den ausgewählten, in Abstand voneinander angeordneten Stellen (47) zu verbinden; Mittel (5) zum Schneiden des Zuschnitts (B) auf eine vorbestimmte Form von den Bahnen des fasrigen Verstärkungsmaterials; Mittel (7) zum Formen des Zuschnitts aus der Vielzahl von Bahnen in die gewünschte dreidimensionale Form der Vorform (P); und Mittel (7) zum Anwenden der elektromagnetischen Strahlung auf den geformten Zuschnitt (B), um das verbleibende, nicht gehärtete Bindemittel (22, 24) zu härten.

7. Vorrichtung nach Anspruch 6, dadurch gekennzeichnet, daß sie weiters Formungsmittel (7) mit einer Form umfaßt, welche zur Aufnahme und zum Pressen des Zuschnitts (B) in die Form der gewünschten dreidimensionalen Vorform (P) betreibbar ist.

8. Vorrichtung nach Anspruch 6, dadurch gekennzeichnet, daß die Mittel (2) zum Aufbringen eines Bindemittels (22, 24) ein mit Ultraviolett-Energie härtbares Bindemittel aufbringen.

9. Vorrichtung zur Herstellung einer starren, dreidimensionalen, verstärkten Vorform nach Anspruch 6, 7 oder 8, dadurch gekennzeichnet, daß sie weiters Mittel (120) zum Aufbringen eines Bindemittels, welches durch Anwenden einer ausgewählten, elektrischen Energie, wie Mikrowellen-Energie, Ultraviolett-Energie oder Elektronenstrahl-Energie, härtbar ist, auf die Vorform (P), Mittel zum Aufbringen eines Verstärkungselementes (ER, IR, LIR) auf die Vorform (P), und Mittel (110) zum Anwenden der elektromagnetischen Energie auf das Bindemittel an vorbestimmten, ausgewählten Stellen (106) umfaßt, um das Verstärkungselement (ER, IR, LIR) an die Vorform (P) zu heften, um die Vorform (P) und das Verstärkungselement (ER, IR, LIR) starr miteinander zu verbinden.

10. Vorrichtung nach Anspruch 9, dadurch gekennzeichnet, daß die Mittel zum Aufbringen des Bindemittels geformt sind, um das Bindemittel an vorbestimmten, ausgewählten Stellen (102) auf die Vorform (P) aufzubringen, und daß die Mittel (110) zum Anwenden der elektromagnetischen Energie die Energie auf das Bindemittel an den Stellen (106) aufbringen, um das Verstärkungselement (ER, IR, LIR) an die Vorform (P) zu heften.

## Revendications

1. Un procédé pour la réalisation d'une préforme tridimensionnelle rigide (P), dans lequel un liant (22, 24) susceptible d'être durci par énergie électromagnétique est appliqué à un matériau de renforcement fibreux et le liant (22, 24) est durci par application d'énergie électromagnétique à une ébauche (B) formée à partir du matériau de renforcement fibreux pour rigidifier l'ébauche (B) en la préforme tridimensionnelle rigide (P) souhaitée, caractérisé en ce que le procédé comprend de plus les étapes suivantes : le déplacement d'une pluralité de toiles de matériau de renforcement fibreux le long de chemins respectifs et le guidage des toiles superposées de sorte qu'elles se superposent parallèlement les unes aux autres en un emplacement prédéterminé (3, 4) et qu'elles se déplacent parallèlement et en contact les unes avec les autres; l'application du liant (22, 24) non-durci susceptible d'être durci par rayonnement électromagnétique à au moins une surface de chaque paire des surfaces se faisant face des toiles en amont de l'emplacement prédéterminé (3); l'application, locale, du rayonnement électromagnétique dans des emplacements (47) espacés choisis des toiles parallèles en contact pour durcir le liant (22, 24) aux emplacements (47) espacés et pour, de ce fait, faire adhérer les toiles les unes aux autres; le découpage de l'ébauche (B) de forme prédéterminée provenant des toiles collées de matériau de renforcement fibreux; le formage de l'ébauche (B) en une forme tridimensionnelle souhaitée de la préforme (P); et l'application du rayonnement électromagnétique à l'ébauche formée (B) pour durcir le liant (22, 24) non-durci restant.

2. Un procédé selon la revendication 1, caractérisé en ce que l'étape de formage est de plus définie comme le placement de l'ébauche (B) entre les première et seconde parties formées (82, 86) d'un outil, lesquelles parties sont formées pour reproduire la forme tridimensionnelle souhaitée de la préforme (P), et la compression des deux parties (82, 86) de l'outil l'une contre l'autre pour mettre en forme l'ébauche (B) tout en appliquant l'énergie électromagnétique pour durcir le liant (22, 24).

3. Un procédé selon la revendication 1, caractérisé en ce que les étapes d'application de la résine liante (22, 24) et d'application, locale, d'un rayonnement électromagnétique sont, de plus, respectivement définies comme l'application d'un liant non-durci susceptible d'être durci par l'énergie de rayonnements ultraviolets à au moins une surface de chaque paire des surfaces se faisant face des toiles et l'application, locale, d'une radiation ultraviolette dans les emplacements (47) choisis.

4. Un procédé pour la réalisation d'une préforme renforcée tridimensionnelle rigide selon l'une quelconque des revendications 1, 2 ou 3, caractérisé en ce qu'il comprend de plus les étapes suivantes : le formage d'une préforme rigide (P) d'une forme souhaitée, l'application d'un liant susceptible d'être durci par l'application d'une énergie électromagnétique choisie, telle que l'énergie de micro-ondes, l'énergie de rayonnements ultraviolets ou l'énergie de faisceau électronique, à la préforme (P), l'application d'un élément de renforcement (ER, IR, LIR) à la préforme (P) et l'application de ladite énergie électromagnétique au liant à des emplacements (106) prédéterminés choisis pour coudre l'élément de renforcement (ER, IR, LIR) à la préforme (P) pour unir, de manière rigide, la préforme (P) et l'élément de renforcement (ER, IR, LIR).

5. Un procédé selon la revendication 4, caractérisé en ce qu'il comprend les étapes suivantes : l'application du matériau liant susceptible d'être durci par l'application d'une énergie électromagnétique choisie, telle que l'énergie de micro-ondes, l'énergie de rayonnements ultraviolets ou l'énergie d'un faisceau électronique, à des emplacements (102) prédéterminés choisis sur la préforme (P) et l'application de ladite énergie électromagnétique au liant pour coudre l'élément de renforcement (ER, IR, LIR) à la préforme (P) aux emplacements (106) où le liant a été appliqué pour unir l'élément de renforcement (ER, IR, LIR) et la préforme (P) en formant une unité rigide.

6. Dispositif pour la réalisation d'une préforme tridimensionnelle rigide (P), comprenant : des moyens (2) pour appliquer un liant (22, 24) susceptible d'être durci par énergie électromagnétique à un matériau de renforcement fibreux, des moyens (5) pour former une ébauche (B) du matériau fibreux en une forme prédéterminée de la préforme (P) et des moyens (7) pour appliquer une énergie électromagnétique à l'ébauche formée pour rigidifier l'ébauche (B) en une préforme tridimensionnelle rigide (P) souhaitée, caractérisé en ce qu'il comprend de plus : des moyens (1) pour déplacer une pluralité de toiles de matériau de renforcement fibreux le long de chemins respectifs et pour guider les toiles superposées de manière coplanaire et parallèles les unes aux autres jusqu'à un emplacement prédéterminé (3, 4) et en contact les unes avec les autres; des moyens (2) pour appliquer le liant (22, 24) non-durci susceptible d'être durci par énergie électromagnétique à au moins une surface de chaque paire de surfaces se faisant face des toiles en amont de l'emplacement prédéterminé; des moyens (3) pour comprimer les toiles déplacées, parallèles, en contact les unes avec les autres, pour disperser le liant et augmenter la pénétration de celui-ci dans les toiles; des moyens (4) pour étaler, localement, le rayonnement électromagnétique en des emplacements espacés choisis des toiles comprimées, en contact, pour durcir le liant (22, 24) et pour, de ce fait, faire adhérer les toiles les unes aux autres auxdits emplacements (47) espacés choisis; des moyens (5) pour découper l'ébauche (B) d'une forme prédéterminée provenant des toiles de matériau de renforcement fibreux; des moyens (7) pour former l'ébauche de la pluralité de toiles dans la forme tridimensionnelle souhaitée de la préforme (P); et des moyens (7) pour appliquer le rayonnement électromagnétique à l'ébauche formée (B) pour durcir le liant (22, 24) non-durci restant.

7. Dispositif selon la revendication 6, caractérisé en ce qu'il comprend de plus des moyens (7) de moulage à l'aide d'un moule susceptible d'être mis en oeuvre pour recevoir et comprimer l'ébauche (B) en la forme tridimensionnelle souhaitée de la préforme (P).

8. Dispositif selon la revendication 6, caractérisé en ce que lesdits moyens (2) pour appliquer un liant (22, 24) appliquent un liant susceptible d'être durci par l'énergie de rayonnements ultraviolets.

9. Dispositif pour la réalisation d'une préforme renforcée tridimensionnelle rigide selon l'une quelconque des revendications 6, 7 ou 8, caractérisé en ce qu'il comprend de plus des moyens (120) pour appliquer un liant susceptible d'être durci par application d'une énergie électromagnétique choisie, telle que l'énergie de microondes, l'énergie de rayonnements ultraviolets ou l'énergie de faisceau électronique, à la préforme (P), des moyens pour appliquer un élément de renforcement (ER, IR, LIR) à la préforme (P), et des moyens (110) pour appliquer ladite énergie électromagnétique au liant en des emplacements (106) prédéterminés choisis pour coudre l'élément de renforcement (ER, IR, LIR) à la préforme (P) et unir la préforme (P) et l'élément de renforcement (ER, IR, LIR) de manière rigide.

10. Dispositif selon la revendication 9, caractérisé en ce que lesdits moyens pour appliquer le liant permettent d'appliquer le liant en des emplacements (102) prédéterminés choisis de la préforme (P) et lesdits moyens (110) pour appliquer ladite énergie électromagnétique appliquent l'énergie au liant auxdits emplacements (106) en vue de permettre la couture de l'élément de renforcement (ER, IR, LIR) à la préforme (P).
